# EUROPEAN PATENT SPECIFICATION

(11) **EP 3 869 058 B1**
(45) Date of publication and mention of the grant of the patent: **03.08.2022**
(21) Application number: 20206171.9
(22) Date of filing: 06.11.2020
(51) Int. Cl.: F16D 27/108, F16D 27/118, F16D 27/14, F16D 23/12

(54) **VEHICLE ELECTROMAGNETIC CLUTCH**
ELEKTROMAGNETISCHE FAHRZEUGKUPPLUNG
EMBRAYAGE ÉLECTROMAGNÉTIQUE DE VÉHICULE

(30) Priority: 21.02.2020 JP 2020028831
(43) Date of publication of application: 25.08.2021
(73) Proprietor: TOYOTA JIDOSHA KABUSHIKI KAISHA, Toyota-shi, Aichi-ken, 471-8571 (JP)
(72) Inventor: MICHISHITA, Masaya, Aichi-ken, 471-8571 (JP); KOBAYASHI, Takahide, Aichi-ken, 471-8571 (JP)
(74) Representative: D Young & Co LLP

(56) References cited:
- JP-A- H02 304 222
- JP-A- H10 184 730
- JP-A- 2018 127 067

## Description

### BACKGROUND OF THE INVENTION

### 1. Field of the Invention

The invention relates to techniques of reducing vibration of an armature of a vehicle electromagnetic clutch in which a friction force is applied to the armature as an electromagnetic coil attracts the armature.

### 2. Description of Related Art

Vehicle electromagnetic clutches are known which include an electromagnetic coil, an armature, and a pair of cam members that is rotated relative to each other about a rotation axis. The armature is coupled to one of the cam members such that the armature is movable relative to the one cam member in the direction of the rotation axis and is not rotatable relative to the one cam member about the rotation axis. When a current is applied to the electromagnetic coil, the electromagnetic coil attracts the armature, whereby a friction force is applied to the armature. The cam members are rotated relative to each other by torque generated by the friction force to move the other cam member in the direction of the rotation axis. For example, Japanese Unexamined Patent Application Publication No. 2018-127067 (JP 2018-127067 A) describes such a vehicle electromagnetic clutch.

### SUMMARY OF THE INVENTION

In the vehicle electromagnetic clutch of JP 2018-127067 A, the armature may vibrate due to stick-slip etc., depending on the state of the friction surfaces between the armature and the electromagnetic coil.

The invention provides a vehicle electromagnetic clutch capable of reducing vibration of an armature.

An aspect of the invention relates to a vehicle electromagnetic clutch including: an electromagnetic coil; an armature; a first cam member and a second cam member; and a damping plate. The first and second cam members are configured to be rotated relative to each other about a rotation axis. The damping plate is disposed over a back surface of the armature and is configured to damp vibration of the armature, the back surface being an opposite surface of the armature from an opposing surface facing the electromagnetic coil, and the damping plate being disposed without being restrained in a rotational direction. The armature is coupled to the first cam member such that the armature is movable relative to the first cam member in a direction of the rotation axis and is not rotatable relative to the first cam member about the rotation axis. When a current is applied to the electromagnetic coil, the electromagnetic coil attracts the armature and a friction force is applied to the armature, and the first cam member and the second cam member are rotated relative to each other by torque generated by the friction force to move the second cam member in the direction of the rotation axis.

According to the vehicle electromagnetic clutch of the above aspect of the invention, the damping plate configured to damp vibration of the armature is disposed over the back surface of the armature, which is the opposite surface of the armature from the opposing surface facing the electromagnetic coil, without being restrained in the rotational direction. Accordingly, when the armature vibrates, the damping plate disposed over the back surface of the armature is also going to vibrate. However, since friction is caused between the damping plate and the armature by inertia of the damping plate, the damping plate damps the vibration of the armature. The vehicle electromagnetic clutch thus reduces vibration of the armature.

In the vehicle electromagnetic clutch of the above aspect, the damping plate may be made of a magnetic material.

According to the vehicle electromagnetic clutch having the above configuration, the damping plate is made of the magnetic material. Therefore, when a current is applied to the electromagnetic coil, not only the armature but also the damping plate are attracted by the electromagnetic coil. Accordingly, when a current is applied to the electromagnetic coil, relatively high sliding resistance is caused between the armature and the damping plate. The vehicle electromagnetic clutch can thus have improved capability of damping vibration of the armature by the damping plate.

In the vehicle electromagnetic clutch of the above aspect, a second damping plate made of the magnetic material may be disposed over a back surface of the damping plate without being restrained in a rotational direction, the back surface being an opposite surface of the damping plate from an opposing surface facing the armature.

According to the vehicle electromagnetic clutch having the above configuration, the second damping plate made of the magnetic material is disposed over the back surface of the damping plate, which is the opposite surface of the damping plate from the opposing surface facing the armature, without being restrained in the rotational direction. Since the vehicle electromagnetic clutch includes the second damping plate, the thickness of the armature can be reduced as compared to the vehicle electromagnetic clutch that does not include the second damping plate. The armature therefore vibrates in a high frequency band. Vibration of the armature can thus be reduced. Moreover, even when the thickness of the armature is reduced, the damping plate and the second damping plate provide a sufficient magnetic path. The torque that is generated by the friction force is therefore less likely to be reduced.

In the vehicle electromagnetic clutch of the above configuration, the armature, the damping plate, the second damping plate may have substantially the same thickness.

According to the vehicle electromagnetic clutch having the above configuration, since the armature, the damping plate, the second damping plate have substantially the same thickness, these components can be manufactured in the same shape. Productivity is therefore improved.

In the vehicle electromagnetic clutch of the above configuration, the second damping plate may be disposed over the back surface of the damping plate such that the second damping plate is movable relative to the first cam member in the direction of the rotation axis and is rotatable relative to the first cam member about the rotation axis.

According to the vehicle electromagnetic clutch having the above configuration, the second damping plate is disposed over the back surface of the damping plate such that the second damping plate is movable relative to the first cam member in the direction of the rotation axis and is rotatable relative to the first cam member about the rotation axis. The second damping plate can therefore be disposed over the back surface of the damping plate without being restrained in the rotational direction. The vibration damping capability is further improved.

In the vehicle electromagnetic clutch of the above configuration, a thickness of the armature may be set in order that the damping plate is also attracted by the electromagnetic coil when the armature is attracted by the electromagnetic coil.

According to the vehicle electromagnetic clutch having the above configuration, the thickness of the armature is set so that the damping plate is also attracted by the electromagnetic coil when the armature is attracted by the electromagnetic coil. Accordingly, when the armature is attracted by the electromagnetic coil and vibrates, the damping plate comes into close contact with the armature, and relatively high sliding resistance is caused between the damping plate and the armature.

In the vehicle electromagnetic clutch of the above aspect, the electromagnetic coil, the armature, the first cam member and the second cam member, and the damping plate may be accommodated in an accommodating case, and the accommodating case may contain lubricating oil.

According to the vehicle electromagnetic clutch having the above configuration, the electromagnetic coil, the armature, the first cam member and the second cam member, and the damping plate are accommodated in the accommodating case, and the accommodating case contains the lubricating oil. Wear of sliding portions between the armature and the damping plate is therefore reduced, and operation is stabilized.

In the vehicle electromagnetic clutch of the above aspect, the first cam member may include a stopper that hinders movement of the damping plate by a predetermined amount or more with respect to the first cam member in the direction of the rotation axis, and an adjustment shim that adjusts a clearance between the damping plate and the armature may be interposed between the stopper and the damping plate.

According to the vehicle electromagnetic clutch having the above configuration, the first cam member has the stopper that hinders movement of the damping plate by the predetermined amount or more with respect to the first cam member in the direction of the rotation axis, and the adjustment shim that adjusts the clearance between the damping plate and the armature is interposed between the stopper and the damping plate. Since the clearance between the damping plate and the armature is adjusted by the adjustment shim, vibration of the armature is damped by the damping plate.

In the vehicle electromagnetic clutch of the above aspect, the damping plate may be disposed over the back surface of the armature such that the damping plate is movable relative to the first cam member in the direction of the rotation axis and is rotatable relative to the first cam member about the rotation axis.

According to the vehicle electromagnetic clutch having the above configuration, the damping plate is disposed over the back surface of the armature such that the damping plate is movable relative to the first cam member in the direction of the rotation axis and is rotatable relative to the first cam member about the rotation axis. The damping plate is therefore disposed over the back surface of the armature without being restrained in the rotational direction.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a skeleton diagram schematically illustrating the configuration of a four-wheel drive vehicle having a vehicle electromagnetic clutch of an embodiment of the invention applied thereto;
FIG. 2 is a sectional view illustrating the configuration of a transfer including a vehicle electromagnetic clutch of a first embodiment in the four-wheel drive vehicle of FIG. 1;
FIG. 3 is an enlarged view of FIG. 2, illustrating the configuration of a first positive clutch (i.e., the vehicle electromagnetic clutch) of the transfer of FIG. 2;
FIG. 4 is an enlarged view of FIG. 3, illustrating the configuration of an electromagnetic actuator of the first positive clutch of FIG. 3;
FIG. 5 illustrates an example of a vehicle electromagnetic clutch of related art different from the embodiment; and
FIG. 6 illustrates a vehicle electromagnetic clutch (first positive clutch) of a second embodiment of the invention.

### DETAILED DESCRIPTION OF EMBODIMENTS

Embodiments of the invention will be described in detail with reference to the drawings. In the following embodiments, the figures are shown simplified or modified as appropriate, and the dimensional ratios, shapes, etc. of portions are not necessarily drawn accurately.

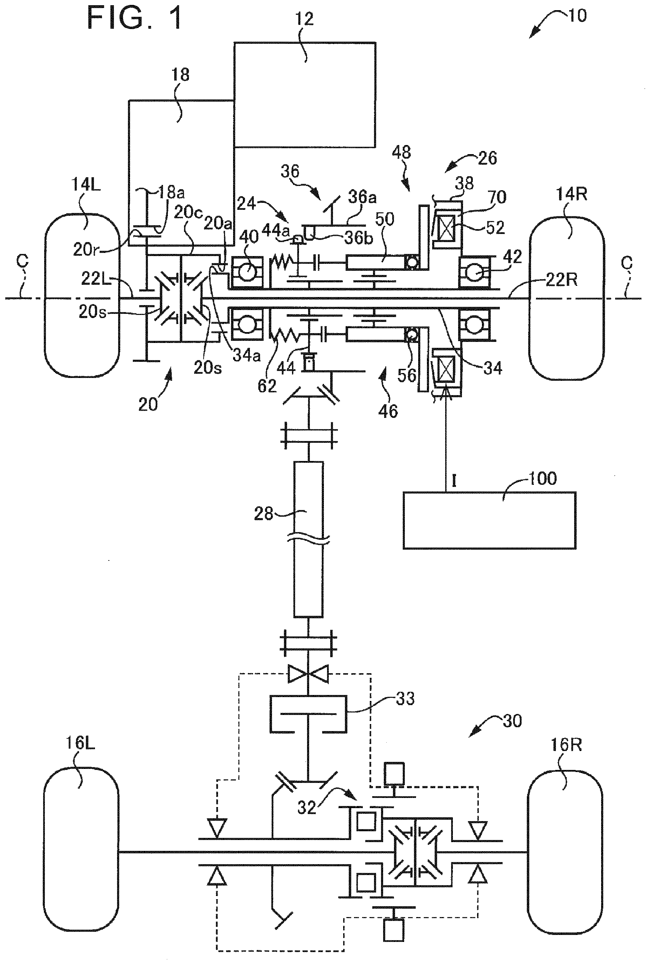

FIG. 1 is a skeleton diagram schematically illustrating the configuration of a four-wheel drive vehicle 10 having a vehicle electromagnetic clutch of an embodiment of the invention applied thereto. In FIG. 1, the four-wheel drive vehicle 10 uses an engine 12 as a driving force source and includes a front-engine, front-wheel drive (FF)-based four-wheel drive device including a first power transmission path and a second power transmission path. The first power transmission path is a path through which the driving force from the engine 12 is transmitted to a pair of right and left front wheels 14R, 14L corresponding to main drive wheels. The second power transmission path is a path through which a part of the driving force of the engine 12 is transmitted to a pair of right and left rear wheels 16R, 16L corresponding to auxiliary drive wheels during a four-wheel drive mode.

When the four-wheel drive vehicle 10 is in a two-wheel drive mode, the driving force transmitted from the engine 12 via an automatic transmission 18 is transmitted through a front wheel driving force split device 20 to a pair of right and left front wheel axles 22R, 22L and the right and left front wheels 14R, 14L. During the two-wheel drive mode, at least a first positive clutch (vehicle electromagnetic clutch) 24 is disengaged, and the driving force from the engine 12 is not transmitted to a transfer 26, a propeller shaft 28, a rear wheel driving force split device 30, and the right and left rear wheels 16R, 16L. When the four-wheel drive vehicle 10 is in the four-wheel drive mode, on the other hand, the first positive clutch 24, a second positive clutch 32, and an electronically controlled coupling 33 are engaged, and the driving force from the engine 12 is transmitted to the transfer 26, the propeller shaft 28, the rear wheel driving force split device 30, and the right and left rear wheels 16R, 16L.

As shown in FIG. 1, the front wheel driving force split device 20 includes, for example, a ring gear 20r, a differential case 20c, etc. The ring gear 20r meshes with an output gear 18a of the automatic transmission 18. The differential case 20c is integrally fixed to the ring gear 20r and has a pair of side gears 20s mounted therein. The differential case 20c has inner peripheral meshing teeth 20a, and an input shaft 34 of the transfer 26 has first outer peripheral spline teeth 34a on its end of the front wheel 14L side. The first outer peripheral spline teeth 34a are fitted in the inner peripheral meshing teeth 20a. A part of the driving force that is transmitted from the engine 12 to the differential case 20c via the automatic transmission 18 is thus input to the transfer 26 via the input shaft 34.

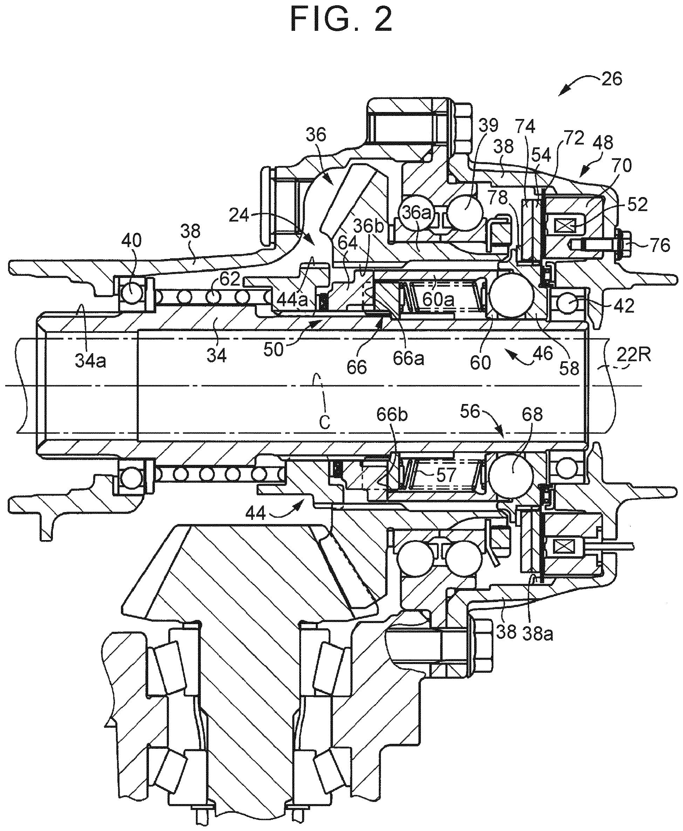

As shown in FIGS. 1 and 2, the transfer 26 includes the cylindrical input shaft 34, a cylindrical ring gear 36, and the first positive clutch 24. The input shaft 34 is coupled to the engine 12 such that power can be transmitted. The ring gear 36 is coupled to the propeller shaft 28 such that power can be transmitted. The first positive clutch 24 selectively disconnects or connects the power transmission path between the input shaft 34 and the ring gear 36. FIG. 2 is a sectional view illustrating the configuration of the transfer 26 in the four-wheel drive vehicle 10 of FIG. 1.

As shown in FIG. 2, the cylindrical ring gear 36 is, for example, a spiral or hypoid bevel gear and has a generally cylindrical shaft portion 36a projecting from the inner peripheral portion of the ring gear 36 toward the front wheel 14R. A bearing 39 is disposed in an accommodating case 38 accommodating, for example, the first positive clutch 24 etc., and the shaft portion 36a of the ring gear 36 is supported by the accommodating case 38 via the bearing 39. The ring gear 36 is thus supported in a cantilever manner so as to be rotatable about a rotation axis C.

As shown in FIG. 2, the cylindrical input shaft 34 extends through the cylindrical ring gear 36, and a part of the input shaft 34 is located inside the ring gear 36. A pair of first and second bearings 40, 42 is disposed in the accommodating case 38, and both ends of the input shaft 34 are supported by the accommodating case 38 via the first and second bearings 40, 42. The input shaft 34 is thus supported such that the input shaft 34 is rotatable about the rotation axis C, namely such that the input shaft 34 is rotatable concentrically with the ring gear 36.

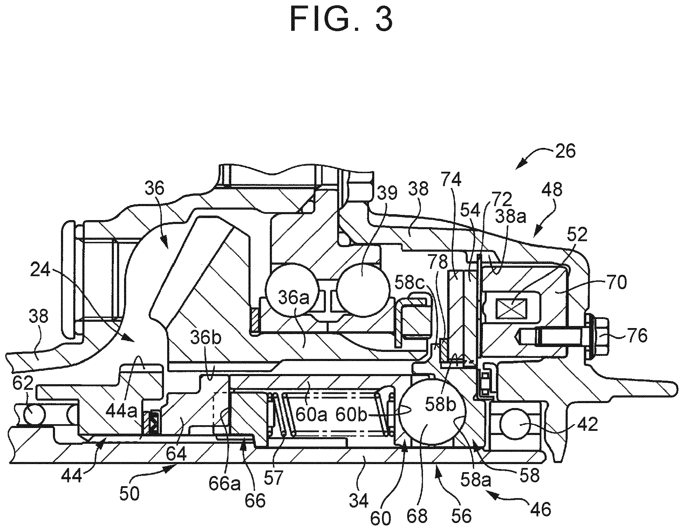

FIG. 3 is an enlarged view of FIG. 2, illustrating the configuration of the first positive clutch 24 of the transfer 26 of FIG. 2. As shown in FIG. 3, the first positive clutch 24 includes inner peripheral meshing teeth 36b, a movable sleeve 44, and a moving device 46. The ring gear 36 has the plurality of inner peripheral meshing teeth 36b on its inner peripheral surface. The movable sleeve 44 has outer peripheral meshing teeth 44a capable of meshing with the inner peripheral meshing teeth 36b of the ring gear 36. The movable sleeve 44 is disposed on the input shaft 34 so as to be movable relative to the input shaft 34 in the direction of the rotation axis C and not to be rotatable relative to the input shaft 34 about the rotation axis C. The moving device 46 selectively moves the movable sleeve 44 between a meshing position and a non-meshing position in the direction of the rotation axis C to selectively engage the first positive clutch 24. The meshing position is the position where the outer peripheral meshing teeth 44a of the movable sleeve 44 moved in the direction of the rotation axis C mesh with the inner peripheral meshing teeth 36b of the ring gear 36. At the meshing position, the ring gear 36 and the movable sleeve 44, that is, the input shaft 34, are not rotatable relative to each other and the first positive clutch 24 is engaged. The non-meshing position is the position where the outer peripheral meshing teeth 44a of the movable sleeve 44 moved in the direction of the rotation axis C do not mesh with the inner peripheral meshing teeth 36b of the ring gear 36. At the non-meshing position, the ring gear 36 and the movable sleeve 44, that is, the input shaft 34, are rotatable relative to each other, and the first positive clutch 24 is disengaged.

As shown in FIG. 3, the moving device 46 includes an electromagnetic actuator 48 and a ratchet mechanism 50. The electromagnetic actuator 48 includes, for example, an electromagnetic coil 52, an armature 54, a ball cam 56, a coil spring 57, etc. When the input shaft 34 is rotating about the rotation axis C, namely when the vehicle is traveling, a current is applied to the electromagnetic coil 52, and the electromagnetic coil 52 attracts the armature 54. A friction force is thus applied to the armature 54, and a pair of first and second cam members (cam members) 58, 60 of the ball cam 56 is rotated relative to each other by braking torque (torque) generated by the friction force. The second cam member 60 is thus moved away from the first cam member 58, namely toward the front wheel 14L, in the direction of the rotation axis C against the biasing forces of the coil spring 57 and a spring 62 describe later. In the electromagnetic actuator 48, when current application to the electromagnetic coil 52 is stopped, the electromagnetic coil 52 no longer attracts the armature 54, and the first cam member 58 and the second cam member 60 rotate together. The second cam member 60 is thus moved toward the first cam member 58, namely toward the front wheel 14R, in the direction of the rotation axis C by the biasing forces of the coil spring 57 and the spring 62. When the second cam member 60 is moved in the direction of the rotation axis C by the electromagnetic actuator 48, the ratchet mechanism 50 holds the movable sleeve 44, moved in the direction of the rotation axis C by the movement of the second cam member 60, at the moved position. The moving device 46 includes the spring 62 that constantly biases the movable sleeve 44 from the non-meshing position toward the meshing position, namely constantly biases the movable sleeve 44 toward the front wheel 14R in the direction of the rotation axis C.

As shown in FIG. 3, the ratchet mechanism 50 includes an annular first piston 60a, an annular second piston 64, and an annular holder 66 having a plurality of first stopping teeth 66a and a plurality of second stopping teeth 66b (see FIG. 2) in the circumferential direction. The first piston 60a is integral with the other of the first and second cam members 58, 60, namely the second cam member 60. The first piston 60a is therefore moved in the direction of the rotation axis C by the electromagnetic actuator 48. Specifically, the first piston 60a is reciprocated by the electromagnetic actuator 48 in the direction of the rotation axis C toward the front wheel 14L and the front wheel 14R at a predetermined stroke. As the first piston 60a is moved in the direction of the rotation axis C by the electromagnetic actuator 48, the second piston 64 moves the movable sleeve 44 to the non-meshing position against the biasing force of the spring 62. The holder 66 stops and holds the second piston 64 moved by the first piston 60a with either the first stopping teeth 66a or the second stopping teeth 66b. The first piston 60a, that is, the second cam member 60, is disposed on the input shaft 34 so as to be movable relative to the input shaft 34 in the direction of the rotation axis C and not to be rotatable relative to the input shaft 34 about the rotation axis C. The second piston 64 is disposed on the input shaft 34 so as to be movable relative to the input shaft 34 in the direction of the rotation axis C and not to be rotatable relative to the input shaft 34 about the rotation axis C. The holder 66 is disposed on the input shaft 34 so as not to be movable relative to the input shaft 34 in the direction of the rotation axis C and not to be rotatable relative to the input shaft 34 about the rotation axis C.

In the first positive clutch 24 configured as described above, as the second cam member 60, that is, the first piston 60a is reciprocated, for example, once in the direction of the rotation axis C toward the front wheel 14L and toward the front wheel 14R by the electromagnetic actuator 48, the movable sleeve 44 is moved to the non-meshing position via the ratchet mechanism 50 against the biasing force of the spring 62, and the second piston 64 is stopped and held by the first stopping teeth 66a of the holder 66, as shown in FIG. 3. In the first positive clutch 24, as the first piston 60a is reciprocated, for example, twice by the electromagnetic actuator 48, that is, the first piston 60a is further reciprocated once with the movable sleeve 44 being located at the non-meshing position, the second piston 64 is released from the first stopping teeth 66a of the holder 66 and is stopped and held by the second stopping teeth 66b of the holder 66 (see the side below the rotation axis C in FIG. 2), and the movable sleeve 44 is moved to the meshing position by the biasing force of the spring 62.

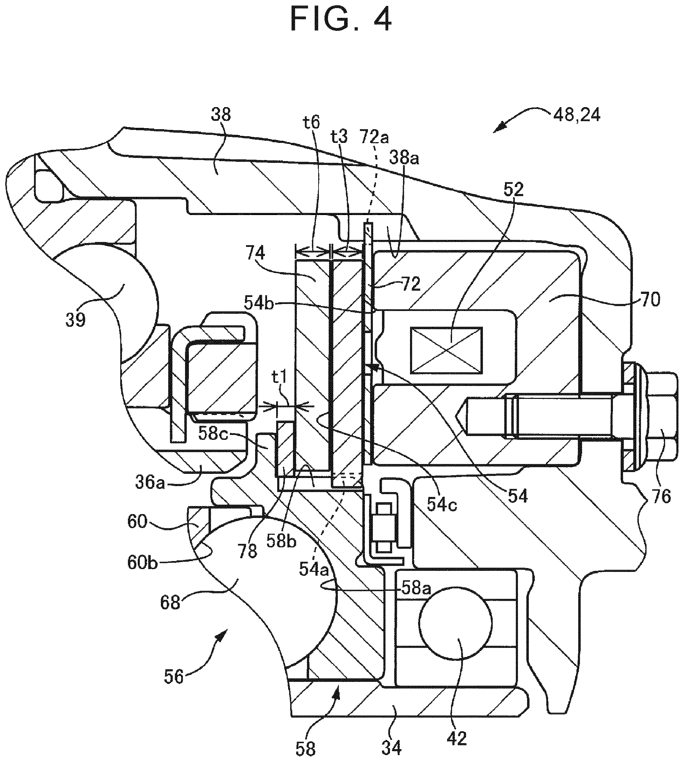

FIG. 4 is an enlarged view of FIG. 3, illustrating the configuration of the electromagnetic actuator 48 of the first positive clutch 24 of FIG. 3. As shown in FIG. 4, the ball cam 56 of the electromagnetic actuator 48 includes the first cam member 58, the second cam member 60, and rolling elements 68. As shown in FIG. 2, the first cam member 58 and the second cam member 60 are annular members interposed between the second piston 64 of the ratchet mechanism 50 and the second bearing 42 so as to be located next to each other in the direction of the rotation axis C. The first cam member 58 is disposed on the input shaft 34 so as to be movable relative to the input shaft 34 in the direction of the rotation axis C and to be rotatable relative to the input shaft 34 about the rotation axis C. As described above, the second cam member 60 is disposed on the input shaft 34 so as to be movable relative to the input shaft 34 in the direction of the rotation axis C and is not rotatable relative to the input shaft 34 about the rotation axis C. The first cam member 58 and the second cam member 60 are thus disposed on the input shaft 34 such that the first cam member 58 and the second cam member 60 are rotatable relative to each other about the rotation axis C. As shown in FIG. 3, the rolling elements 68 are interposed between a cam surface 58a of the first cam member 58 and a cam surface 60b of the second cam member 60.

As shown in FIG. 4, the electromagnetic actuator 48 further includes a coil yoke 70, an outer plate 72, and a damping plate 74. The coil yoke 70 fixes the electromagnetic coil 52 to the accommodating case 38 that is a non-rotating member by, for example, fastening bolts 76. The outer plate 72, the armature 54, and the damping plate 74 are arranged next to each other in the direction of the rotation axis C in the accommodating case 38. Specifically, the outer plate 72, the armature 54, and the damping plate 74 are arranged in this order from the electromagnetic coil 52, namely from the coil yoke 70. As shown in FIG. 4, the components of the electromagnetic actuator 48 such as, for example, the electromagnetic coil 52, the armature 54, the ball cam 56, and the damping plate 74 are accommodated in the accommodating case 38, and the accommodating case 38 contains lubricating oil. The components accommodated in the accommodating case 38 such as, for example, the armature 54 and the damping plate 74 are therefore wet with the lubricating oil. Each of the outer plate 72, the armature 54, and the damping plate 74 is made of a magnetic material such as, for example, low carbon steel (S10C). Accordingly, when a current is applied to the electromagnetic coil 52, the electromagnetic coil 52 attracts not only the armature 54 but also the outer plate 72 and the damping plate 74.

As shown in FIG. 4, the outer plate 72 is a disc-shaped member disposed between the electromagnetic coil 52, that is, the coil yoke 70, and the armature 54. The outer plate 72 is configured to generate a friction force between the outer plate 72 and the armature 54 when the armature 54 is attracted by the electromagnetic coil 52 and interposed between the armature 54 and the coil yoke 70. As shown in FIG. 4, the outer plate 72 therefore has outer peripheral meshing teeth 72a on its outer periphery, and the outer peripheral meshing teeth 72a of the outer plate 72 are spline-fitted in inner peripheral spline teeth 38a of the accommodating case 38. That is, the outer plate 72 is placed in the accommodating case 38 so as to be movable relative to the accommodating case 38 in the direction of the rotation axis C and not to be rotatable relative to the accommodating case 38 about the rotation axis C.

As shown in FIG. 4, the armature 54 is a disc-shaped movable plate disposed between the outer plate 72 and the damping plate 74. The armature 54 is made of a magnetic material that is magnetically attractive. The armature 54 has inner peripheral meshing teeth 54a on its inner periphery. The inner peripheral meshing teeth 54a of the armature 54 are spline-fitted in outer peripheral spline teeth 58b provided on the outer periphery of one of the first and second cam members 58, 60, namely the first cam member 58. That is, the armature 54 is coupled to the first cam member 58 so as to be movable relative to the first cam member 58 in the direction of the rotation axis C and not to be rotatable relative to the first cam member 58 about the rotation axis C.

As shown in FIG. 4, the damping plate 74 is a disc-shaped movable plate disposed over a back surface 54c of the armature 54, that is, over the opposite surface of the armature 54 from an opposing surface 54b facing the electromagnetic coil 52, namely facing the outer plate 72. The damping plate 74 is made of a magnetic material that is magnetically attractive. The damping plate 74 is disposed on the first cam member 58 so as to be movable relative to the first cam member 58 in the direction of the rotation axis C and to be rotatable relative to the first cam member 58 about the rotation axis C. That is, the damping plate 74 is disposed over the back surface 54c of the armature 54 without being restrained in the rotational direction about the rotation axis C.

As shown in FIG. 4, the first cam member 58 has a stopper 58c that hinders movement of the damping plate 74 by a predetermined amount or more with respect to the first cam member 58 in the direction of the rotation axis C. An annular adjustment shim 78 is interposed between the stopper 58c and the damping plate 74. For example, the clearance between the damping plate 74 and the armature 54 and the clearance between the armature 54 and the outer plate 72 can be adjusted by changing the thickness t1 of the adjustment shim 78.

In the electromagnetic actuator 48 configured as described above, when an electronic control device 100 (see FIG. 1) supplies a predetermined drive current I [A] (see FIG. 1) to the electromagnetic coil 52 with, for example, the input shaft 34 rotating during traveling of the vehicle, namely with the first and second cam members 58, 60 rotating together during traveling of the vehicle, the electromagnetic coil 52 attracts the armature 54 that is a rotating member, and a friction force is thus applied to the armature 54. Braking torque (torque) is generated in the first cam member 58 by the friction force. As a result, the first and second cam members 58, 60 rotate relative to each other, and the second cam member 60 moves toward the front wheel 14L in the direction of the rotation axis C via the rolling elements 68 against the biasing forces of the spring 62 and the coil spring 57. When the electronic control device 100 stops supplying the drive current I to the electromagnetic coil 52, the armature 54 is no longer attracted by the electromagnetic coil 52 and the braking torque is no longer generated in the first cam member 58. As a result, the first cam member 58 rotates with the second cam member 60 via the rolling elements 68, and the second cam member 60 moves toward the front wheel 14R in the direction of the rotation axis C by the biasing forces of the spring 62 and the coil spring 57.

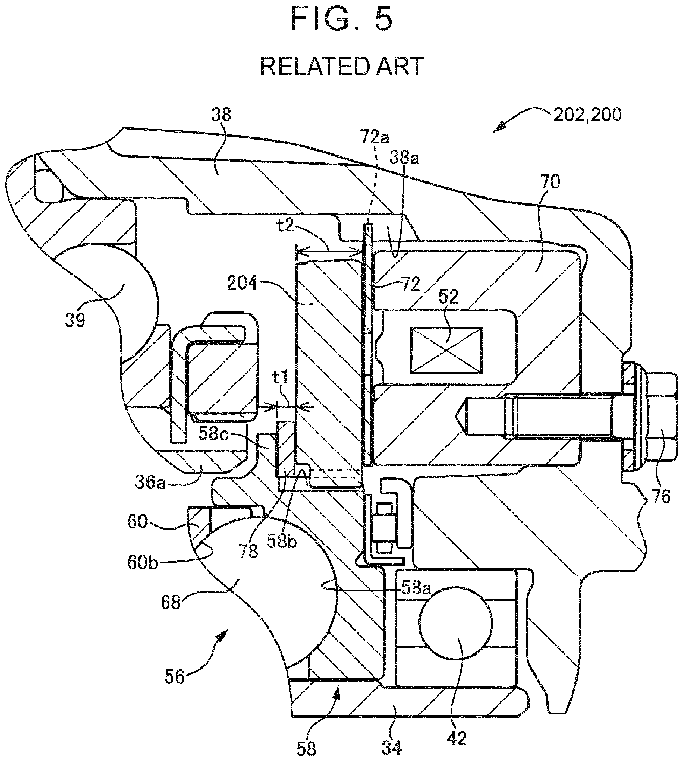

FIG. 5 illustrates a first positive clutch 200 that is an example of a first positive clutch of related art different from the present embodiment. The first positive clutch 200 is different from the first positive clutch 24 of the first embodiment in that the thickness t2 of an armature 204 is larger than the thickness t3 of the armature 54 and that an electromagnetic actuator 202 does not include the damping plate 74. The first positive clutch 200 is otherwise similar to the first positive clutch 24 of the first embodiment. In the first positive clutch 200, depending on the state of the friction surfaces between the armature 204 and the electromagnetic coil 52, vibration of the armature 204 such as self-excited vibration may occur due to stick-slip etc., and abnormal noise may be generated from the first positive clutch 200. In the first positive clutch 24 of the first embodiment, on the other hand, when the armature 54 vibrates, the damping plate 74 disposed over the back surface 54c of the armature 54 is also going to vibrate. However, since friction such as viscous resistance of the lubricating oil or sliding resistance due to direct contact is caused between the damping plate 74 and the armature 54 by inertia of the damping plate 74, the damping plate 74 damps the vibration of the armature 54. The thickness t3 of the armature 54 is set in advance by experiments etc. such that, in the case where the drive current I is supplied from the electronic control device 100 to the electromagnetic coil 52 and the armature 54 is attracted by the electromagnetic coil 52, slipping occurs between the damping plate 74 and the armature 54 when the damping plate 74 is also attracted by the electromagnetic coil 52 and the armature 54 vibrates. In the case where the drive current I is supplied from the electronic control device 100 to the electromagnetic coil 52 and the armature 54 is attracted by the electromagnetic coil 52 but the armature 54 does not vibrate, the damping plate 74 moves with the armature 54. In the first positive clutch 24 of the first embodiment, merely the thickness t2 of the armature 204 of the first positive clutch 200 is changed and the damping plate 74 is added to the first positive clutch 200. The invention can thus be applied to the first positive clutch 200 without adding new components other than the armature 54 and the damping plate 74.

As described above, according to the first positive clutch 24 of the first embodiment, the damping plate 74 that damps vibration of the armature 54 is disposed over the back surface 54c of the armature 54, namely over the opposite surface of the armature 54 from the opposing surface 54b facing the electromagnetic coil 52, without being restrained in the rotational direction. When the armature 54 vibrates, the damping plate 74 disposed over the back surface 54c of the armature 54 is also going to vibrate. However, since friction is caused between the damping plate 74 and the armature 54 by the inertia of the damping plate 74, the damping plate 74 damps the vibration of the armature 54. Vibration of the armature 54 is thus reduced.

According to the first positive clutch 24 of the first embodiment, the damping plate 74 is made of a magnetic material. Therefore, when a current is applied to the electromagnetic coil 52, not only the armature 54 but also the damping plate 74 are attracted by the electromagnetic coil 52. Accordingly, when a current is applied to the electromagnetic coil 52, relatively high sliding resistance is caused between the armature 54 and the damping plate 74. The first positive clutch 24 thus has improved capability of damping vibration of the armature 54 by the damping plate 74.

According to the first positive clutch 24 of the first embodiment, the electromagnetic coil 52, the armature 54, the first and second cam members 58, 60, and the damping plate 74 are accommodated in the accommodating case 38, and the accommodating case 38 contains the lubricating oil. Wear of the sliding portions between the armature 54 and the damping plate 74 is therefore reduced, and operation is stabilized.

According to the first positive clutch 24 of the first embodiment, the thickness t3 of the armature 54 is set so that the damping plate 74 is also attracted by the electromagnetic coil 52 when the armature 54 is attracted by the electromagnetic coil 52. Accordingly, when the armature 54 is attracted by the electromagnetic coil 52 and vibrates, the damping plate 74 comes into close contact with the armature 54, and relatively high sliding resistance is caused between the damping plate 74 and the armature 54.

According to the first positive clutch 24 of the first embodiment, one of the first and second cam members 58, 60, namely the first cam member 58, has the stopper 58c that hinders movement of the damping plate 74 by the predetermined amount or more with respect to the first cam member 58 in the direction of the rotation axis C, and the adjustment shim 78 that adjusts the clearance between the damping plate 74 and the armature 54 is interposed between the stopper 58c and the damping plate 74. Since the clearance between the damping plate 74 and the armature 54 is adjusted by the adjustment shim 78, vibration of the armature 54 can be damped by the damping plate 74.

According to the first positive clutch 24 of the first embodiment, the damping plate 74 is disposed over the back surface 54c of the armature 54 such that the damping plate 74 is movable relative to the first cam member 58 in the direction of the rotation axis C and is rotatable relative to the first cam member 58 about the rotation axis C. The damping plate 74 is thus disposed over the back surface 54c of the armature 54 without being restrained in the rotational direction about the rotation axis C.

Next, another embodiment of the invention will be described. In the following description, those components that are common to the embodiments are denoted with the same signs and description thereof will be omitted.

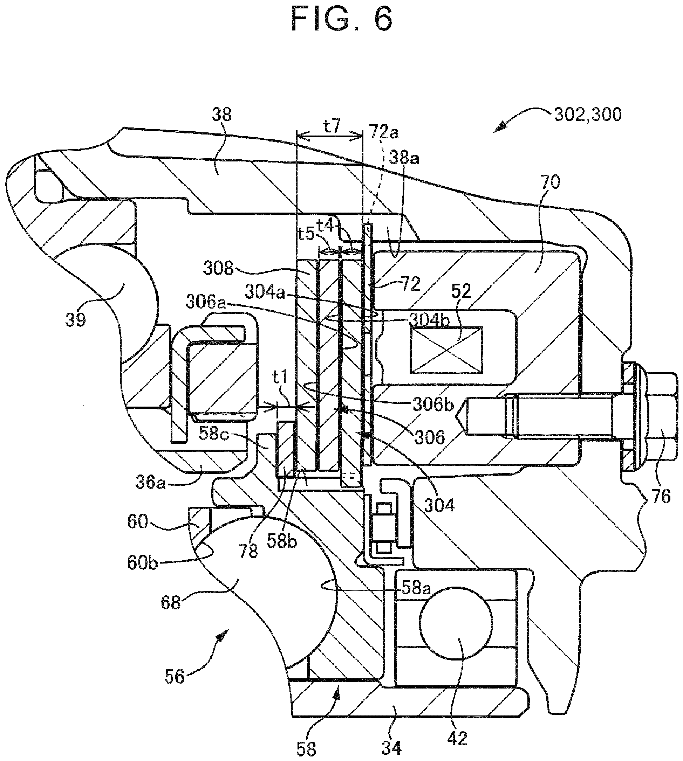

FIG. 6 illustrates a first positive clutch (vehicle electromagnetic clutch) 300 of a second embodiment of the invention, namely illustrates the configuration of an electromagnetic actuator 302 included in the first positive clutch 300. The first positive clutch 300 of the second embodiment is different from the first positive clutch 24 of the first embodiment in that the thickness t4 of an armature 304 is smaller than the thickness t3 of the armature 54, in that the thickness t5 of a damping plate 306 is smaller than the thickness t6 of the damping plate 74, and in that the electromagnetic actuator 302 further includes a second damping plate 308. The first positive clutch 300 of the second embodiment is otherwise substantially the same as the first positive clutch 24 of the first embodiment. Each of the armature 304, the damping plate 306, and the second damping plate 308 is made of a magnetic material such as low carbon steel (S10C). Accordingly, the armature 304, the damping plate 306, and the second damping plate 308 can be viewed as the armature 204 of the first positive clutch 200 of FIG. 5, which is made of a magnetic material, such as low carbon steel (S10C), having a multi-plate structure. The overall thickness t7 of the armature 304, the damping plate 306, and the second damping plate 308 is substantially the same as the thickness t2 of the armature 204. The armature 304, the damping plate 306, and the second damping plate 308 can thus be made of plate materials having substantially the same thickness.

As shown in FIG. 6, the second damping plate 308 is a disc-shaped movable plate disposed over a back surface 306b of the damping plate 306, that is, over the opposite surface of the damping plate 306 from an opposing surface 306a facing the armature 304. The second damping plate 308 is made of a magnetic material that is magnetically attractive. The second damping plate 308 is disposed on the first cam member 58 so as to be movable relative to the first cam member 58 in the direction of the rotation axis C and to be rotatable relative to the first cam member 58 about the rotation axis C. That is, the second damping plate 308 is disposed over the back surface 306b of the damping plate 306 without being restrained in the rotational direction about the rotation axis C. The damping plate 306 is disposed over a back surface 304b of the armature 304, namely over the opposite surface of the armature 304 from an opposing surface 304a facing the electromagnetic coil 52.

As described above, according to the first positive clutch 300 of the second embodiment, the second damping plate 308 made of a magnetic material is disposed over the back surface 306b of the damping plate 306, that is, over the opposite surface of the damping plate 306 from the opposing surface 306a facing the armature 304, without being restrained in the rotational direction about the rotation axis C. By adding the second damping plate 308, the thickness t4 of the armature 304 can be reduced as compared to, for example, the armature 54 of the first positive clutch 24 that does not have the second damping plate 308. The armature 304 therefore vibrates in a high frequency band. Vibration of the armature 304 is thus reduced. Moreover, even when the thickness t4 of the armature 304 is reduced, the damping plate 306 and the second damping plate 308 provide a sufficient magnetic path. The braking torque that is generated by the friction force is therefore less likely to be reduced.

According to the first positive clutch 300 of the second embodiment, the second damping plate 308 is disposed over the back surface 306b of the damping plate 306 such that the second damping plate 308 is movable relative to the first cam member 58 in the direction of the rotation axis C and is rotatable relative to the first cam member 58 about the rotation axis C. The second damping plate 308 is thus disposed over the back surface 306b of the damping plate 306 without being restrained in the rotational direction about the rotation axis C. The vibration damping capability is further improved.

Although the first and second embodiments of the invention are described above in detail with reference to the drawings, the invention is also applicable to other forms.

For example, in the first embodiment, the first positive clutch 24 includes the electromagnetic actuator 48. However, the electromagnetic actuator 48 may be used in an electromagnetic friction clutch that is used in, for example, the electronically controlled coupling 33. In the electromagnetic friction clutch, movement of the second cam member 60 in the direction of the rotation axis C by the electromagnetic actuator 48 is transmitted to a piston, and friction plates in a clutch drum and friction plates in a clutch hub are pressed by the piston. That is, the invention is applicable not only to electromagnetic positive clutches such as the first positive clutch 24 but also to electromagnetic friction clutches.

In the first embodiment, the first positive clutch 24 is used as an electromagnetic positive clutch that selectively disconnects or connects the power transmission path between the engine 12 and the propeller shaft 28 in the four-wheel drive vehicle 10. However, the first positive clutch 24 may be used as, for example, an electromagnetic positive clutch (second positive clutch 32) that selectively disconnects or connects the power transmission path between the propeller shaft 28 and the rear wheels 16R, 16L.

In the first and second embodiments, the armatures 54, 304, the damping plates 74, 306, and the second damping plate 308 are made of a magnetic material such as low carbon steel (S10C). However, magnetic materials other than the low carbon steel (S10C) may be used. That is, any magnetic material may be used as long as the material can be attracted by the electromagnetic coil 52 when a current is applied to the electromagnetic coil 52.

The above description is merely illustrative, and the invention can be implemented in various modified or improved forms based on the knowledge of those skilled in the art.

## Claims

1. A vehicle electromagnetic clutch, comprising:
an electromagnetic coil (52);
an armature (54; 304);
a first cam member (58) and a second cam member (60) that are configured to be rotated relative to each other about a rotation axis (C);
wherein the armature (54; 304) is coupled to the first cam member (58) such that the armature (54; 304) is movable relative to the first cam member (58) in a direction of the rotation axis (C) and is not rotatable relative to the first cam member (58) about the rotation axis (C), and
wherein when a current is applied to the electromagnetic coil (52), the electromagnetic coil (52) attracts the armature (54; 304) and a friction force is applied to the armature (54; 304), and the first cam member (58) and the second cam member (60) are rotated relative to each other by torque generated by the friction force to move the second cam member (60) in the direction of the rotation axis (C),
**characterized in that** it further comprises a damping plate (74; 306) disposed over a back surface (54c) of the armature (54; 304) and configured to damp vibration of the armature (54; 304), the back surface (54c; 304b) being an opposite surface of the armature (54; 304) from an opposing surface (54b; 304a) facing the electromagnetic coil (52), and the damping plate (74; 306) being disposed without being restrained in a rotational direction.

2. The vehicle electromagnetic clutch according to claim 1, wherein the damping plate (74; 306) is made of a magnetic material.

3. The vehicle electromagnetic clutch according to claim 2, wherein a second damping plate (308) made of the magnetic material is disposed over a back surface (306b) of the damping plate (306) without being restrained in a rotational direction of the second damping plate (308), the back surface (306b) being an opposite surface of the damping plate (306) from an opposing surface (306a) facing the armature (304).

4. The vehicle electromagnetic clutch according to claim 3, wherein the armature (304), the damping plate (306), the second damping plate (308) have substantially the same thickness.

5. The vehicle electromagnetic clutch according to claim 3, wherein the second damping plate (308) is disposed over the back surface (306b) of the damping plate (306) such that the second damping plate (308) is movable relative to the first cam member (58) in the direction of the rotation axis (C) and is rotatable relative to the first cam member (58) about the rotation axis (C).

6. The vehicle electromagnetic clutch according to claim 2, wherein a thickness of the armature (54; 304) is set in order that the damping plate (74; 306) is also attracted by the electromagnetic coil (52) when the armature (54; 304) is attracted by the electromagnetic coil (52).

7. The vehicle electromagnetic clutch according to any one of claims 1 to 6, wherein:
the electromagnetic coil (52), the armature (54; 304), the first cam member (58) and the second cam member (60), and the damping plate (74; 306) are accommodated in an accommodating case (38); and
the accommodating case (38) contains lubricating oil.

8. The vehicle electromagnetic clutch according to any one of claims 1 to 7, wherein:
the first cam member (58) includes a stopper (58c) that hinders movement of the damping plate (74; 306) by a predetermined amount or more with respect to the first cam member (58) in the direction of the rotation axis (C); and
an adjustment shim (78) that adjusts a clearance between the damping plate (74; 306) and the armature (54; 304) is interposed between the stopper (58c) and the damping plate (74; 306).

9. The vehicle electromagnetic clutch according to any one of claims 1 to 8, wherein the damping plate (74; 306) is disposed over the back surface (54c; 304b) of the armature (54; 304) such that the damping plate (74; 306) is movable relative to the first cam member (58) in the direction of the rotation axis (C) and is rotatable relative to the first cam member (58) about the rotation axis (C).

## Patentansprüche

1. Elektromagnetische Fahrzeugkupplung, umfassend:
eine elektromagnetische Spule (52);
einen Anker (54; 304);
ein erstes Nockenelement (58) und ein zweites Nockenelement (60), die dazu ausgelegt sind, in Relation zueinander um eine Drehachse (C) gedreht zu werden;
wobei der Anker (54; 304) mit dem ersten Nockenelement (58) derart gekoppelt ist, dass der Anker (54; 304) in Relation zu dem ersten Nockenelement (58) in eine Richtung der Drehachse (C) bewegbar ist und nicht in Relation zu dem ersten Nockenelement (58) um die Drehachse (C) drehbar ist, und
wobei, wenn ein Strom an die elektromagnetische Spule (52) angelegt wird, die elektromagnetische Spule (52) den Anker (54; 304) anzieht und eine Reibkraft auf den Anker (54; 304) aufgebracht wird, und das erste Nockenelement (58) und das zweite Nockenelement (60) durch ein durch die Reibkraft erzeugtes Drehmoment in Relation zueinander gedreht werden, um das zweite Nockenelement (60) in die Richtung der Drehachse (C) zu bewegen,
**dadurch gekennzeichnet, dass** sie ferner eine Dämpfungsplatte (74; 306) umfasst, die über einer Rückfläche (54c) des Ankers (54; 304) angeordnet und dazu ausgelegt ist, eine Vibration des Ankers (54; 304) zu dämpfen, wobei die Rückfläche (54c; 304b) eine gegenüberliegende Fläche des Ankers (54; 304) von einer gegenüberliegenden Fläche (54b; 304a) ist, die der elektromagnetischen Spule (52) zugewandt ist, und wobei die Dämpfungsplatte (74; 306) angeordnet ist, ohne in eine Drehrichtung beschränkt zu sein.

2. Elektromagnetische Fahrzeugkupplung nach Anspruch 1, wobei die Dämpfungsplatte (74; 306) aus einem magnetischen Material besteht.

3. Elektromagnetische Fahrzeugkupplung nach Anspruch 2, wobei eine zweite Dämpfungsplatte (308), die aus dem magnetischen Material besteht, über einer Rückfläche (306b) der Dämpfungsplatte (306) angeordnet ist, ohne in eine Drehrichtung der zweiten Dämpfungsplatte (308) beschränkt zu sein, wobei die Rückfläche (306b) eine gegenüberliegende Fläche der Dämpfungsplatte (306) von einer gegenüberliegenden Fläche (306a) ist, die dem Anker (304) zugewandt ist.

4. Elektromagnetische Fahrzeugkupplung nach Anspruch 3, wobei der Anker (304), die Dämpfungsplatte (306), die zweite Dämpfungsplatte (308) im Wesentlichen dieselbe Dicke aufweisen.

5. Elektromagnetische Fahrzeugkupplung nach Anspruch 3, wobei die zweite Dämpfungsplatte (308) über der Rückfläche (306b) der Dämpfungsplatte (306) derart angeordnet ist, dass die zweite Dämpfungsplatte (308) in Relation zu dem ersten Nockenelement (58) in die Richtung der Drehachse (C) bewegbar ist und in Relation zu dem ersten Nockenelement (58) um die Drehachse (C) drehbar ist.

6. Elektromagnetische Fahrzeugkupplung nach Anspruch 2, wobei eine Dicke des Ankers (54; 304) so festgelegt ist, dass die Dämpfungsplatte (74; 306) auch durch die elektromagnetische Spule (52) angezogen wird, wenn der Anker (54; 304) durch die elektromagnetische Spule (52) angezogen wird.

7. Elektromagnetische Fahrzeugkupplung nach einem der Ansprüche 1 bis 6, wobei:
die elektromagnetische Spule (52), der Anker (54; 304), das erste Nockenelement (58) und das zweite Nockenelement (60) und die Dämpfungsplatte (74; 306) in einem Aufnahmegehäuse (38) aufgenommen sind; und
das Aufnahmegehäuse (38) Schmieröl enthält.

8. Elektromagnetische Fahrzeugkupplung nach einem der Ansprüche 1 bis 7, wobei:
das erste Nockenelement (58) einen Anschlag (58c) umfasst, der eine Bewegung der Dämpfungsplatte (74; 306) um einen vorbestimmten Betrag oder mehr in Bezug auf das erste Nockenelement (58) in die Richtung der Drehachse (C) verhindert; und
eine Einstellscheibe (78), die ein Spiel zwischen der Dämpfungsplatte (74; 306) und dem Anker (54; 304) einstellt, zwischen dem Anschlag (58c) und der Dämpfungsplatte (74; 306) angeordnet ist.

9. Elektromagnetische Fahrzeugkupplung nach einem der Ansprüche 1 bis 8, wobei die Dämpfungsplatte (74; 306) über der Rückfläche (54c; 304b) des Ankers (54; 304) derart angeordnet ist, dass die Dämpfungsplatte (74; 306) in Relation zu dem ersten Nockenelement (58) in die Richtung der Drehachse (C) bewegbar ist und in Relation zu dem ersten Nockenelement (58) um die Drehachse (C) drehbar ist.

## Revendications

1. Embrayage électromagnétique de véhicule, comprenant :
une bobine électromagnétique (52) ;
une armature (54 ; 304) ;
un premier élément de came (58) et un deuxième élément de came (60) qui sont configurés pour effectuer une rotation l'un par rapport à l'autre autour d'un axe de rotation (C) ;
l'armature (54 ; 304) étant accouplée au premier élément de came (58) de telle manière que l'armature (54 ; 304) soit mobile par rapport au premier élément de came (58) dans une direction de l'axe de rotation (C) et ne soit pas rotative par rapport au premier élément de came (58) autour de l'axe de rotation (C), et
lorsqu'un courant est appliquée à la bobine électromagnétique (52), la bobine électromagnétique (52) attirant l'armature (54 ; 304) et une force de frottement étant appliquée à l'armature (54 ; 304), et le premier élément de came (58) et le deuxième élément de came (60) effectuant une rotation l'un par rapport à l'autre sous l'effet d'un couple généré par la force de frottement pour déplacer le deuxième élément de came (60) dans la direction de l'axe de rotation (C),
**caractérisé en ce qu'**il comprend en outre une plaque d'amortissement (74 ; 306) placée par-dessus une surface arrière (54c) de l'armature (54 ; 304) et configurée pour amortir la vibration de l'armature (54 ; 304), la surface arrière (54c ; 304b) étant une surface de l'armature (54 ; 304) opposée à une surface en regard (54b ; 304a) tournée vers la bobine électromagnétique (52), et la plaque d'amortissement (74 ; 306) étant placée sans être contrainte dans un sens de rotation.

2. Embrayage électromagnétique de véhicule selon la revendication 1, dans lequel la plaque d'amortissement (74 ; 306) est constituée d'un matériau magnétique.

3. Embrayage électromagnétique de véhicule selon la revendication 2, dans lequel une deuxième plaque d'amortissement (308) constituée du matériau magnétique est placée par-dessus une surface arrière (306b) de la plaque d'amortissement (306) sans être contrainte dans un sens de rotation de la deuxième plaque d'amortissement (308), la surface arrière (306b) étant une surface de la plaque d'amortissement (306) opposée à une surface en regard (306a) tournée vers l'armature (304).

4. Embrayage électromagnétique de véhicule selon la revendication 3, dans lequel l'armature (304), la plaque d'amortissement (306), la deuxième plaque d'amortissement (308) présentent sensiblement la même épaisseur.

5. Embrayage électromagnétique de véhicule selon la revendication 3, dans lequel la deuxième plaque d'amortissement (308) est placée par-dessus la surface arrière (306b) de la plaque d'amortissement (306) de telle manière que la deuxième plaque d'amortissement (308) soit mobile par rapport au premier élément de came (58) dans la direction de l'axe de rotation (C) et soit rotative par rapport au premier élément de came (58) autour de l'axe de rotation (C).

6. Embrayage électromagnétique de véhicule selon la revendication 2, dans lequel une épaisseur de l'armature (54 ; 304) est définie de façon à ce que la plaque d'amortissement (74 ; 306) soit également attirée par la bobine électromagnétique (52) lorsque l'armature (54 ; 304) est attirée par la bobine électromagnétique (52).

7. Embrayage électromagnétique de véhicule selon l'une quelconque des revendications 1 à 6, dans lequel :
la bobine électromagnétique (52), l'armature (54 ; 304), le premier élément de came (58) et le deuxième élément de came (60), et la plaque d'amortissement (74 ; 306) sont logés dans un carter de logement (38) ; et
le carter de logement (38) contient de l'huile de graissage.

8. Embrayage électromagnétique de véhicule selon l'une quelconque des revendications 1 à 7, dans lequel :
le premier élément de came (58) comporte une butée (58c) qui empêche la plaque d'amortissement (74 ; 306) de se déplacer d'une quantité prédéterminée ou plus par rapport au premier élément de came (58) dans la direction de l'axe de rotation (C) ; et
une pastille de réglage (78) qui règle un écartement entre la plaque d'amortissement (74 ; 306) et l'armature (54 ; 304) est intercalée entre la butée (58c) et la plaque d'amortissement (74 ; 306).

9. Embrayage électromagnétique de véhicule selon l'une quelconque des revendications 1 à 8, dans lequel la plaque d'amortissement (74 ; 306) est placée par-dessus la surface arrière (54c ; 304b) de l'armature (54 ; 304) de telle manière que la plaque d'amortissement (74 ; 306) soit mobile par rapport au premier élément de came (58) dans la direction de l'axe de rotation (C) et soit rotative par rapport au premier élément de came (58) autour de l'axe de rotation (C).
